Europäisches Patentamt

European Patent Office

Office européen des brevets

(19)

(11) Publication number: **0 003 054**
**B1**

(12) **EUROPEAN PATENT SPECIFICATION**

(45) Date of publication of patent specification: **29.04.81**

(21) Application number: **78101860.1**

(22) Date of filing: **28.12.78**

(51) Int. Cl.³: **G 03 B 9/08, G 03 B 17/38,
G 03 B 17/42**

(54) Shutter release mechanism.

(30) Priority: **06.01.78 US 867562**

(43) Date of publication of application:
**25.07.79 Bulletin 79/15**

(45) Publication of the grant of the European patent:
**29.04.81 Bulletin 81/17**

(84) Designated Contracting States:
**DE GB**

(56) References cited:
**DE - A - 2 457 445**
**DE - B - 1 074 971**
**DE - B - 2 132 276**
**US - A - 3 690 228**

(73) Proprietor: **EASTMAN KODAK COMPANY**
**343 State Street**
**Rochester, New York 14650 (US)**

(72) Inventor: **O'Reagan, James Richard**
**901 Elmgrove Road**
**Rochester New York (US)**

(74) Representative: **Blickle, K. Werner, Dipl.-Ing. et al,**
**KODAK AKTIENGESELLSCHAFT Postfach 369**
**D-7000 Stuttgart 60 (DE)**

Courier Press, Leamington Spa, England.

## Shutter release mechanism

This invention relates to camera shutter release mechanisms.

Shutter release mechanisms for still picture cameras commonly have relatively long travel paths. A long travel path helps assure desired shutter release and prevent accidental shutter release despite wear of parts and tolerance variations in the mechanism. However, a long travel path increases the likelihood of camera motion during exposure and detracts from the operator's sense of convenience in taking a picture.

Such prior mechanisms commonly have a shutter release and a shutter restraining latch. These two members may be connected directly or through a series of intermediate motion· transmitting members. The long travel path is often due to slack, sometimes intentionally built into the mechanism and sometimes unavoidable due to wear and tolerance variation between the various motion transmitting members.

It is an object of this invention to provide a shutter release mechanism in which a shutter release is coupled by one or more intermediate motion transmitting members to a shutter restraining latch, but in which slack in the mechanism, due to wear, wide tolerances or the like is eliminated, thereby providing a short path for the shutter release.

This object is accomplished by the provision of a wedge-shaped member which is spring-urged between two adjoining members in the mechanism. The wedge-shaped member removes slack from the mechanism and permits a short path for the shutter release without substantial danger of accidental release or inoperativeness.

According to a preferred embodiment of the invention, the wedge-shaped member is totally removable from motion transmitting relation between the adjoining members to prevent undesired picture-taking under certain conditions, for example, when the film has not been completely advanced. This feature has the advantage of permitting depression of the shutter release when in this condition. Many prior devices lock the shutter release mechanism to prevent exposure, and damage sometimes results from forcing the shutter release against the lock in attempting to take a picture.

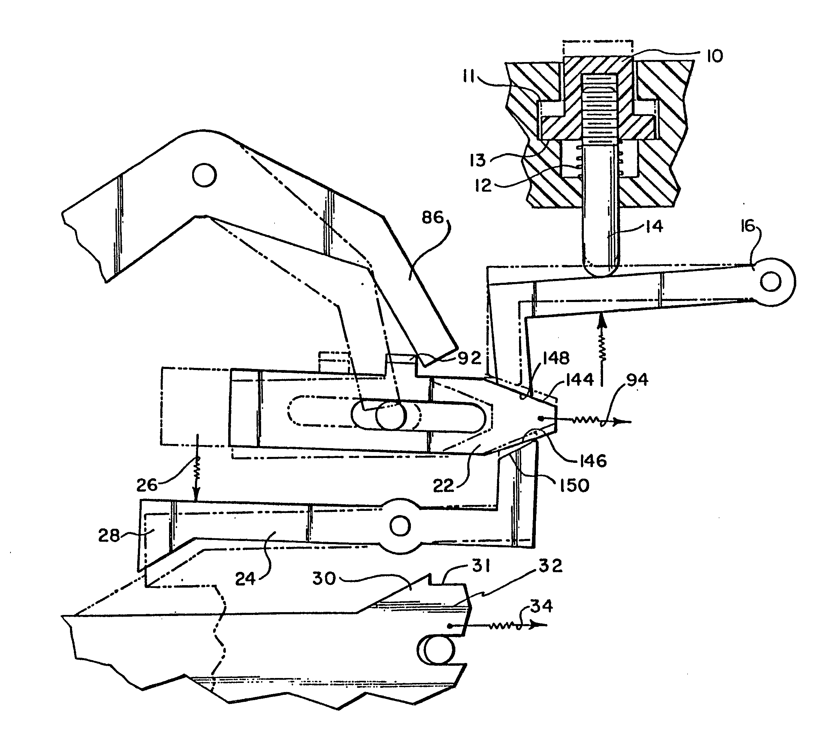

For a complete understanding of the invention, as well as further advantages and features thereof, reference should be made to the following detailed description of the invention taken in conjunction with the accompanying drawing. The drawing is a front view of a camera shutter release mechanism in which solid lines show the mechanism with the shutter release fully depressed and broken lines show the mechanism in other positions of operation.

A shutter release 10 is normally held by a spring 12 against a reference surface 11 of the housing of the camera. When the shutter release 10 is depressed by a camera operator, the force of such depression is transmitted by a series of intermediate motion transmitting members, including a pin 14, a lever 16, and a wedge-shaped member 22 to a shutter restraining latch 24 to move the shutter restraining latch in a clockwise direction to release a restrained shutter member, for example, a shutter blade 32 to begin exposure. The restrained shutter member can be the opening blade of a two-bladed shutter, the blade for a single-bladed shutter, or a shutter driver, high energy lever or the like.

At the beginning of film advance for the next picture, an extracting lever 86 is moved in a clockwise direction by a mechanism (not shown) to engage a lug 92 on the wedge-shaped member 22 and remove the wedge-shaped member from motion transmitting relation between the lever 16 and the shutter restraining latch 24. This provides double exposure prevention during film advance. Note that the shutter release 10 can now be depressed until it touches a surface 13 without putting excessive force on any of the other more delicate parts in the mechanism. Prior art devices in which the mechanism is locked to prevent exposure can often be broken by an operator who attempts to depress the shutter release when the mechanism is in a locked condition.

As the film is further advanced, the shutter 32 is cocked by a mechanism (not shown) by being moved against the urging of a spring 34 to the left until a finger 28 on shutter restraining latch 24 engages a latch 30 on the shutter. A spring 26 is strong enough to urge the finger 28 into contact with a horizontal reference surface 31 of latch 30.

At the end of film advance, the extracting lever 86 is moved in a counterclockwise direction permitting a spring 94 to pull the wedge-shaped member between adjoining members in the mechanism, namely lever 16 and shutter restraining latch 24. The force of spring 94 is transferred from inclined surfaces 144 and 146 of the wedge-shaped member to complementary surfaces 148 and 150 of the adjoining members. This force is insufficient to offset the force of spring 26, and finger 28 remains in contact with reference surface 31. The shutter release 10 is being held by spring 12 against reference surface 11 of the housing. Therefore, the force of spring 94 removes all slack in the mechanism between the two reference surfaces 11 and 31. Thus, a given distance of depression of shutter release 10 away from reference surface 11 will always result in a given distance of movement of finger 28 away from reference surface 31, without regard to the amount of wear, varying tolerances or the like in the mechanism. Note that reference surface 11 is not critical. If dirt or wear should change its position, the wedge-shaped member will compensate by entering less or greater distance between adjoining members. This precision in the mechanism permits an extremely short shutter release path. Without the wedge-shaped member, the path must be longer to allow for wear, tolerances and the like.

According to the preferred embodiment, the wedge-shaped member also performs a second function of preventing an unwanted exposure. This function can be utilized when film has not been fully advanced, when a flash unit is not operative, when scene light is too low and other like conditions well known to those skilled in the art. It is a particularly advantageous exposure prevention device because it permits depression of the shutter release without putting undue strain on the mechanism.

## Claims

1. A shutter release mechanism for a camera, said mechanism having a series of members including a depressible shutter release (10), a shutter restraining latch (24), and at least one intermediate member (22) for transmitting motion from the depressible shutter release to the shutter restraining latch, characterized in that the intermediate member is a wedge-shaped member (22) normally spring-urged into wedging contact between adjoining members of the series thereby urging the adjoining members apart and removing slack from the shutter release mechanism.

2. Shutter release mechanism according to claim 1, characterized by means (86) for moving the wedge-shaped member (22) out of motion transmitting relation between the adjoining members against the bias of the spring (94) which normally urges said wedge-shaped member into wedging contact, thereby permitting depression of the depressible shutter release without release of the shutter.

3. Shutter release mechanism according to claim 2, characterized in that said moving means comprises an extracting lever (86) engageable with the wedge-shaped member to move the latter in response to initial actuation of a film advance mechanism.

4. Shutter release mechanism according to any of claims 1 through 3, characterized in that the bias of said spring (94) urging the wedge-shaped member (22) into wedging contact is smaller than the bias of a spring (26) for urging the shutter restraining latch (24) against a reference surface (31) of a restrained shutter member.

5. Shutter release mechanism according to any of the preceding claims, characterized in that the wedge-shaped member (22) is movable out of wedging contact in response to an inoperative flash unit coupled with said camera.

6. Shutter release mechanism according to any of claims 1 through 4, characterized in that the wedge-shaped member (22) is movable out of wedging contact in response to scene light measured by the exposure control mechanism of the camera being below a predetermined value.

## Revendications

1. Mécanisme de déclenchement d'obturateur pour appareil de prise de vues qui parmi un groupe d'éléments comprend un poucier de déclenchement apte à être enfoncé (10), un loquet (24) de retenue de l'obturateur et au moins un élément intermédiaire (22) pour transmettre un déplacement du poucier au loquet, mécanisme caractérisé en ce que l'élément intermédiaire (22) est un élément cunéiforme normalement élastiquement appliqué pour être coincé entre des éléments contigus du groupe de manière à écarter les éléments contigus et à rattraper le jeu du mécanisme.

2. Mécanisme conforme à la revendication 1 caractérisé en ce qu'il comprend des moyens (86) pour déplacer l'élément cunéiforme (22) hors de la position lui permettant de transmettre un déplacement entre les éléments contigus à l'encontre de l'effort du ressort (94) qui normalement sollicite l'élément cunéiforme pour le coincer afin de permettre l'enfoncement du poucier sans pour autant déclencher l'obturateur.

3. Mécanisme conforme à la revendication 2 caractérisé en ce que les moyens comprennent un levier extracteur (86) apte à rencontrer l'élément cunéiforme pour déplacer ce dernier à la suite de la mise en oeuvre initiale d'un dispositif de transport de film.

4. Mécanisme conforme à l'une quelconque des revendications 1 à 3 caractérisé en ce que l'effort du ressort (94) sollicitant l'élément cunéiforme (22) pour le coincer est inférieur à l'effort du ressort (26) pour appliquer le loquet (24) contre une surface de référence (31) d'un organe de retenue de l'obturateur.

5. Mécanisme conforme à l'une quelconque des revendications précédentes caractérisé en ce que l'élément cunéiforme (22) est apte à se mouvoir pour être décoincé du fait de l'accouplement à l'appareil d'un dispositif d'éclairage à éclair inopérant.

6. Mécanisme conforme à l'une quelconque des revendications 1 à 4, caractérisé en ce que l'élément cunéiforme (22) est apte à se mouvoir pour être décoincé du fait que le flux lumineux de la scène à enregistrer mesuré par le dispositif de réglage de l'exposition est inférieur à une valeur prédéterminée.

**Patentansprüche**

1. Verschlußauslösevorrichtung für eine Kamera, die eine in Wirkverbindung stehende Reihe von Gliedern enthält, mit einem durch Drücken zu betätigenden Verschlußauslöser (10), einer Verschlußklinke (24) und mindestens einem Zwischenglied (22) zur Übertragung der Bewegung von dem vorgenannten Verschlußauslöser auf die Verschlußklinke, dadurch gekennzeichnet, daß als Zwischenglied ein keilförmiges Glied (22) vorgesehen ist, das normalerweise unter der Vorspannkraft einer Feder in einer Keilstellung zwischen benachbarten Gliedern der Gliederreihe gehalten wird, wodurch diese Glieder auseinandergedrückt werden und bei der Verschlußauslösevorrichtung auftretendes Spiel beseitigt wird.

2. Verschlußauslösevorrichtung nach Anspruch 1, gekennzeichnet durch Mittel (86), durch die das keilförmige Glied (22) entgegen der Wirkung der Feder (94), die es normalerweise in seine Keilstellung vorspannt, aus seiner die Bewegung übertragenden Stellung zwischen den benachbarten Gliedern herausbewegt wird, wodurch ein Niederdrücken des Verschlußauslösers ohne Auslösen des Verschlusses möglich ist.

3. Verschlußauslösevorrichtung nach Anspruch 2, dadurch gekennzeichnet, daß die Bewegungsmittel einen Steuerhebel (86) umfassen, der an dem keilförmigen Glied angreifen kann, um es in Abhängigkeit von der Anfangsbewegung einer Filmvorschubvorrichtung zu bewegen.

4. Verschlußauslösevorrichtung nach einem der Ansprüche 1 bis 3, dadurch gekennzeichnet, daß die Vorspannkraft der das keilförmige Glied (22) in seine Keilstellung drückenden Feder (94) geringer ist als die Vorspannkraft einer Feder (26), die die Verschlußklinke (24) gegen eine Bezugsfläche (31) eines arretierten Verschlußteils drückt.

5. Verschlußauslösevorrichtung nach einem der vorhergehenden Ansprüche, dadurch gekennzeichnet, daß das keilförmige Glied (22) aus seiner Keilstellung herausbewegbar ist, wenn sich an der Kamera eine nicht blitzbereite Blitzvorrichtung befindet.

6. Verschlußauslösevorrichtung nach einem der Ansprüche 1 bis 4, dadurch gekennzeichnet, daß das keilförmige Glied (22) aus seiner Keilstellung herausbewegbar ist, wenn die von der Belichtungssteuervorrichtung der Kamera gemessene Aufnahmehelligkeit einen vorbestimmten Wert unterschreitet.